# EUROPEAN PATENT SPECIFICATION

(11) **EP 2 046 584 B1**
(45) Date of publication and mention of the grant of the patent: **03.10.2012**
(21) Application number: 07805722.1
(22) Date of filing: 19.07.2007
(51) Int. Cl.: B60B 17/00

(54) **DEVICE FOR REDUCING RAILWAY WHEEL NOISE WHEN MOVING ON RAIL**
VORRICHTUNG ZUR VERMINDERUNG DES EISENBAHNRADLÄRMS BEI BEWEGUNG AUF DER SCHIENE
DISPOSITIF POUR REDUIRE LE BRUIT DES ROUES DE CHEMIN DE FER LORSQU'ELLES SE DEPLACENT SUR LE RAIL

(30) Priority: 28.07.2006 IT BS20060168
(43) Date of publication of application: 15.04.2009
(73) Proprietor: Lucchini RS S.P.A., 24065 Lovere (BG) (IT)
(72) Inventor: CERVELLO, Steven, I-24065 Lovere (BG) (IT)
(74) Representative: Sangiacomo, Fulvia
(86) International application number: PCT/IT2007/000510
(87) International publication number: WO 2008/012855

(56) References cited:
- DE-A1- 3 119 960
- DE-A1- 19 542 342
- FR-A- 2 717 122
- GB-A- 2 163 112
- US-A- 4 183 572

## Description

### Field of the Invention

This invention concerns in general the metal wheels of railway and tram cars, and refers in particular to a device to soundproof these wheels when moving on rails and especially wheels with block brakes.

### State of the Technique

The wheels are the main cause of noise produced by a train in movement. The contact and running of the train wheels on the rails are a source of vibrations which represent the primary causes for an undesirable acoustic emission. To reduce the noise made by train wheels when in movement it is necessary to dampen the vibrations. Various kinds of systems to meet this objective have already been proposed, recognizable for example in documents EP-0 872 358, EP-1 026 009, US-3 843 188, JP-61 010140, applied to the wheel web or disk, in which polymeric, viscoplastic materials are mainly used, on their own or commonly in combination with a rigid layer, usually of metal such as steel, adhering to the wheel web or disk, between the hub and the peripheral rim.

Document US 4,183,572 describes a noise damping apparatus, for damping the noise caused by wheels running on rails, comprising a noise screen connected to the inner edge of the wheel rim and composed of two walls and a damping material filling the space between the two walls.

### Objectives and Summary of the Invention

An objective, however, of this invention is to provide a new, original vibration dissipater device which attached to every railway wheel enables the noise to be really dampened, by basically reducing the noise during contact with a respective rail when moving.

Another objective of the invention is to provide a vibration dissipater device to reduce the noise of railway wheels which is simple to manufacture and easily applied to the front of the web or disk that connects the hub to the rim of a wheel, without contact with the web or disk itself and independent of the profile of the latter.

These objectives are reached, in compliance with the invention, with a vibration dampener device composed basically by two flat annular metal sheets, coupled and joined face to face and attached to the wheel, in front of the intermediate web or disk thereof, to cover the area of the wheel comprised between its hub and the rim.

Therefore, according to the invention the noise of each railway wheel in movement is reduced by generating, between the metal sheets of the device facing and in contact with each other, forces of friction tending to dissipate the vibrations in order to efficiently dampening their energy.

### Brief Description of the Drawings

The invention will furthermore be illustrated more in detail in the course of the description made in reference to the enclosed indicative and not limiting drawings, in which:

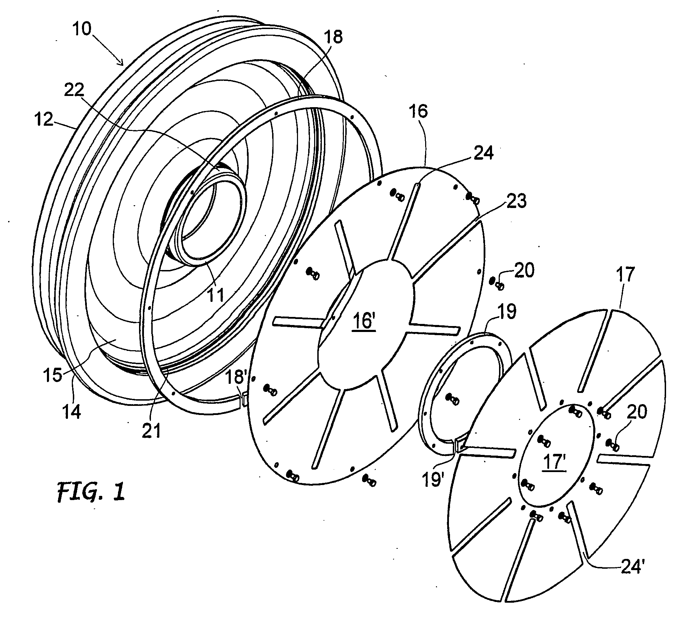

Fig. 1 is an exploded view of the device in association with a railway wheel: and

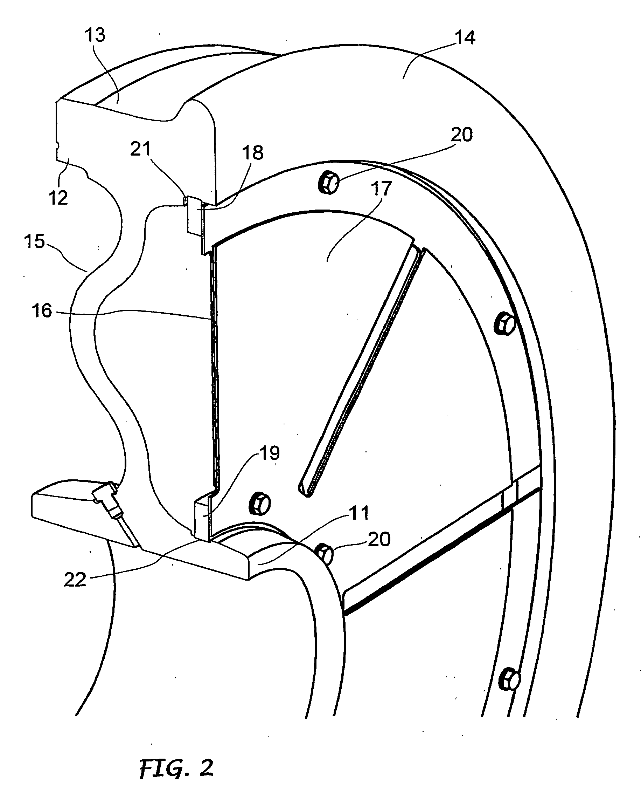

Fig. 2 is a cross section of the device when assembled and attached to the wheel.

### Detailed Description of the Invention

As shown, the device of the present invention can be attached to a railway wheel 10 which usually has a hub 11, a rim 12 with a running surface, or tread, 13 and a flange 14 on its inner side, and an intermediate web or disk 15 that joins the hub 11 to the rim 12.

The device comprises two flat annular metal plates 16, 17, preferably of stainless steel, both with a centre bore 16', 17'. Both the external diameter and the diameter of the central bore 16' of a first annular plate 16 are respectively larger than the external diameter and the diameter of the central bore 17' of the second annular plate 17.

The two annular plates 16, 17 are positioned concentrically, placed face to face and attached to each other by rivets distributed on their surfaces. The first annular plate 16 is fixed peripherally to a supporting ring 18, whereas the second annular plate 17 is fixed to a relative central supporting ring 19.

Fixing of each annular plate 16, 17 to respective supporting ring 18, 19 is achieved by means of screws 20 each of which passes through a bore provided in the plate and screwed into a threaded bore provided in the corresponding ring.

The two annular plates 16, 17 are fastened to the wheel 10 by means of their respective plate supporting rings 18, 19, by making the peripheral supporting ring 18 of the first annular plate 16 fit into a groove 21 provided in the radial internal surface of the wheel rim 12 and the central supporting ring 19 of the second annular plate 17 into a groove 22 provided in the external radial surface of the hub 11. The plate supporting rings 18, 19 of the two matched annular plates both have a radial cut 18', 19' so as to be flexibly open and deformable to facilitate their insertion into the respective grooves 21, 22 of the wheel rim and hub.

The grooves 21, 22 can be provided in the rim and in the hub on the inner side and/or on the external side of the wheel so as to be able to assemble the vibration dampener device either on the external or internal side or even on both sides of the wheel.

On the other hand, the dimensions of said grooves will be carefully chosen both to permit assembly of the plate supporting rings and to guarantee a correct fastening of the system during all the operating conditions of the wheel. In fact, the vibration dampener device must remain fastened to the wheel even should the wheel be equipped with block brakes, which engage with the running surfaces, or tread, 13 and may cause the wheel rim to heat up to temperatures of about 500°C and consequently cause circumferential dilation.

In this specific case then:
- at least the annular plate 16 fastened to the wheel rim by means of the peripheral supporting ring 18 is provided with a radial cut 23 to permit it deform around the circumference in order to adapt to the geometric shape of said supporting ring when the latter is dilated due to heating of the wheel rim;
- both the annular plates have a number of radial slots 24, 24' to permit ventilation and consequent cooling of the part of the wheel covered by the device.

## Claims

1. Vibration dampener device to reduce the noise of moving railway wheels, which have a hub, a wheel rim with a running surface or tread and a flange, and an intermediate web or disk joining the hub to the wheel rim, comprising two flat, annular, metal plates (16, 17), coupled and joined face to face and attached to the wheel, in front of the intermediate web or disk, to cover the area of the wheel between the hub and the wheel rimi characteized in that the first annular plate (16) is fixed to the wheel rim and the second annular plate (17) is fixed to the wheel hub.

2. Vibration dampener device according to claim 1, wherein said annular plates (16, 17) both have a central bore (16', 17'), and wherein a first annular plate (16) has an external diameter and a central bore diameter larger than the external diameter and central bore diameter of the second annular plate (17).

3. Vibration dampener device according to the previous claims, wherein said annular plates are positioned concentrically and attached to each other by fixing means distributed on their surfaces.

4. Vibration dampener device according to claims 1 to 3, wherein the first annular plate (16) is fixed to a peripheral supporting ring (18) and the second plate is fixed to a centre supporting ring (19), and wherein said peripheral supporting ring (18) is inserted and held in a groove (21) provided in the internal radial surface of the wheel rim, whereas said centre supporting ring (19) is inserted and held in a groove (22) provided in the external radial surface of the wheel hub.

5. Vibration dampener device according to claim 4, wherein each plate supporting ring is open radially and at least the first annular plate has a radial cut (23).

6. Vibration dampener device according to any of the previous claims, wherein each annular plate (16, 17) has radial ventilation slots.

7. Vibration dampener device according to any of the previous claims, wherein the annular plates are made of steel, preferably stainless.

8. Vibration dampener device according to any of the previous claims, which is assembled in front of the intermediate web or disk at the inner side of the wheel.

9. Vibration dampener device according to any of claims 1 to 7, which is mounted in front of the intermediate web or disk at the outer side of the wheel.

10. Vibration dampener device according to any of claims 1 to 7, which is mounted in front of the intermediate web or disk on either side of the wheel.

## Patentansprüche

1. Vibrationsdämpfungsvorrichtung zur Verminderung des Lärms eines Eisenbahnrades bei dessen Bewegung, das eine Nabe, eine Radfelge mit einer Lauffläche oder Profil und einen Flansch, einen Zwischensteg oder Zwischenscheibe hat, die die Nabe und die Felge verbinden, die zwei flache, ringförmige Metallplatten (16, 17) umfasst, die mit dem Rad einander gegenüber gekoppelt und verbunden sind und an diesem vor dem Zwischensteg oder der Zwischenscheibe befestigt sind, um einen Bereich des Rades zwischen der Nabe und der Radfelge zu bedecken; **dadurch gekennzeichnet dass** die erste ringförmige Platte (16) an der Radfelge fixiert ist und die zweite ringförmige Platte (17) an der Radnabe fixiert ist.

2. Vibrationsdämpfungsvorrichtung nach Anspruch 1, wobei die genannten ringförmigen Platten (16, 17) beide eine Mittelbohrung (16', 17') haben und wobei eine erste ringförmige Platte (16) einen Aussendurchmesser und einen Mittelbohrungsdurchmesser hat die grösser sind als der Aussendurchmesser und der Mittelbohrungsdurchmesser der zweiten ringförmigen Platte (17).

3. Vibrationsdämpfungsvorrichtung nach den vorhergehenden Ansprüche, wobei die genannten ringförmigen Platten zueinander konzentrisch liegen und aneinander mittels auf dessen Oberflachen verteilten Fixierungsmittel befestigt sind.

4. Vibrationsdämpfungsvorrichtung nach den Ansprüchen von 1 zu 3, wobei die erste ringförmige Platte (16) an einem Randstützring (18) und die zweite Platte an einem Mittelstützring (19) fixiert sind und wobei der genannte Randstützring (18) in einer Rille (21) eingesteckt und festgehalten ist, die in der inneren Radialoberfläche der Radfelge vorgesehen ist, während der genannte Mittelstützring (19) in einer Rille (22) eingesteckt und festgehalten ist, die in der äußeren Radialoberfläche den Radnabe vorgesehen ist.

5. Vibrationsdämpfungsvorrichtung nach Anspruch 4, wobei jeder Plattenstützring radial geöffnet ist und die erste ringförmige Platte einen Radialschnitt (23) hat.

6. Vibrationsdämpfungsvorrichtung nach einem der vorhergehenden Ansprüche, wobei jede ringförmige Platte (16, 17) radiale Belüftungsschlitze hat.

7. Vibrationsdämpfungsvorrichtung nach einem der vorhergehenden Ansprüche, wobei die ringförmige Platten aus Stahl, vorzugsweise aus Edelstahl, sind.

8. Vibrationsdämpfungsvorrichtung nach einem der vorhergehenden Ansprüche, die vor dem Zwischensteg oder der Zwischenscheibe an der Innenseite des Rades zusammengebaut ist.

9. Vibrationsdämpfungsvorrichtung nach einem der Ansprüche von 1 bis 7, die vor dem Zwischensteg oder der Zwischenscheibe an der Außenseite des Rades zusammengesetzt ist.

10. Vibrationsdämpfungsvorrichtung nach einem der Ansprüche von 1 bis 7, die vor dem Zwischensteg oder der Zwischenscheibe an beiden Seiten des Rades zusammengesetzt ist.

## Revendications

1. Dispositif d'atténuation de vibrations pour réduire le bruit des roues de J chemin de fer lorsqu'elles se déplacent, qui ont un moyeu, une bandage de la roue avec une surface de roulement ou une empreinte et une boudin et une tige ou un disque intermédiaires combinent le moyeu à la bandage de la roue, qui comprend deux plaques métalliques annulaires plats (16, 17), qui sont attelées et unies face à face et attachées à la roue, devant à la tige o au disque intermédiaires, pour couvrir la région de la roue entre le moyeu et la bandage de la roue, **caractérisé en ce que** la première plaque annulaire (16) est fixée à la bandage de la roue e la deuxième plaque annulaire (17) est fixée au moyeu de la roue.

2. Dispositif d'atténuation de vibrations selon la revendication 1, dans le quel les dites plaques annulaires (16, 17) ont les deux un trou central (16', 17') et dans le quel une première plaque annulaire (16) a un diamètre externe et un diamètre du trou central qui sont plus grands du diamètre externe et du diamètre du trou central de la deuxième plaque annulaire (17).

3. Dispositif d'atténuation de vibrations selon les revendications précédents, dans le quel les dites plaques annulaire sont positionnées concentriquement et attachées l'une à l'autre parmi moyens de fixage distribués sur leur surfaces.

4. Dispositif d'atténuation de vibrations selon le revendications de 1 à 3, dans le quel la première plaque annulaire (16) est fixée à un anneau de support périphérique (18) et la deuxième plaque est fixée à un anneau de support central (19), et dans le quel le dit anneau de support périphérique (18) est inséré et maintenu dans une rainure (21) qui est fourni dans la surface radiale interne de la bandage de la roue, dans le quel le dit anneau de support central (19) est inséré et maintenu dans une rainure (22) qui est fourni dans la surface radiale externe de le moyeu de la roue.

5. Dispositif d'atténuation de vibrations selon la revendication 4, dans le quel chaque anneau de support de la plaque est ouvert radialement et au moins la première plaque annulaire a une entaille radiale (23).

6. Dispositif d'atténuation de vibrations selon quelconque des revendications précédents, dans le quel chaque plaque annulaire (16, 17) a des fentes radiales de ventilation.

7. Dispositif d'atténuation de vibrations selon quelconque des revendications précédents, dans le quel les plaques annulaires son réalisées en acier, de préférence en acier inoxydable.

8. Dispositif d'atténuation de vibrations selon quelconque des revendications précédents, qui est assemblé en face à la tige ou au disque intermédiaires sur le côté interne de la roue.

9. Dispositif d'atténuation de vibrations selon une des revendications de 1 à 7, qui est monté en face à la tige ou au disque intermédiaires sur le côté externe de la roue.

10. Dispositif d'atténuation de vibrations selon une des revendications de 1 à 7, qui est monté en face à la tige ou au disque intermédiaires sur les deux côtés de la roue.
